# EUROPEAN PATENT APPLICATION

(11) **EP 0 601 759 A1**
(43) Date of publication of application: **15.06.1994**
(21) Application number: 93309504.4
(22) Date of filing: 29.11.1993
(51) Int. Cl.: G06F 15/401

(54) **Method for searching a collection of documents**

(30) Priority: 10.12.1992 US 988534
(71) Applicant: XEROX CORPORATION, Rochester New York 14644 (US)
(72) Inventor: Henderson, Richard D., San Jose, California 95128 (US); Barbarino, Michael J., Moss Beach, California 94038 (US)
(74) Representative: Johnson, Reginald George

(57) **Abstract**

A method for searching a collection of documents for a set of documents acceptable to a user without requiring the user to enter search words includes partitioning the collection of documents into sets of documents through the use of an automatic partitioning algorithm, such as a fractionation or clustering algorithm. A summary is then generated for each of the sets of documents through use of an automatic summarization algorithm. The user is then enabled to select one or more of the sets of documents from the summary to define a new collection of documents. The partitioning, summarizing and selecting steps are repeated on each successive new collection of documents until the set of documents in a selected set is accepted by the user.

## Description

This invention relates to improvements in methods for document retrieval, and, more particularly, to improvements and methods for document searching, sorting and retrieval.

Document searching and retrieval is becoming of increased importance in today's society in which increasingly large quantities of documents are published and available for reference. One of the problems in such large bodies of documents is the difficulty in identifying a selected few documents that are pertinent to a particular user search.

Many systems have been proposed and currently exist that allow users to type key words or phrases, for example, into a computer, which then searches throughout the entire collection of documents (or a word index or look up table generated from them) to identify those particular documents that contain the specified word or phrases. Nevertheless, unless the words or phrases are particularly unique to the desired document or set of documents that are desired to be reached by the user, not uncommonly large numbers of documents are found requiring additional user input in redefining the user inquiry to reduce the number of "hits" to a manageable number. Moreover, it is not uncommon for authors of articles or other documents to use different words to express the same or similar meanings. However, unless a user specifies sufficiently the various different words, it is possible, even common, for relevant documents to be not found during the typical word or phrase searches.

In light of the above, it is, therefore, an object of the invention to provide an improved method for searching a collection of documents for a set of documents acceptable to a user, without requiring the user to enter search words.

Accordingly, the present invention provides a method as defined in any one of the appended claims.

In one embodiment of the invention a method is provided of the type described that can be performed through use of automatic document partitioning and summarizing algorithms.

In accordance with a broad aspect of the invention, a method for searching a collection of documents for a set of documents acceptable to a user without requiring the user to enter search words is presented. The method includes partitioning the collection of documents into sets of documents. A summary is generated for each of the sets of documents. The user then enabled to select one or more of the sets of documents from the summaries to define a new collection of documents. The partitioning, summarizing, and selecting steps are then repeated on each successive new collection of documents until a set of documents acceptable to the user is generated.

The steps of partitioning the collection of documents and generating a summary of each set of documents may be done by performing automatic partitioning and summarizing algorithms. The automatic partitioning algorithm can be a linear partitioning algorithm, such as a clustering or fractionation algorithm.

The present invention will be described further, by way of example, with reference to the accompanying drawings, in which:-
Fig. 1 is a flowchart illustrating the main steps of an embodiment of the invention; and
Fig. 2 is a flowchart illustrating the main steps of a summarization procedure that can be used in the invention.

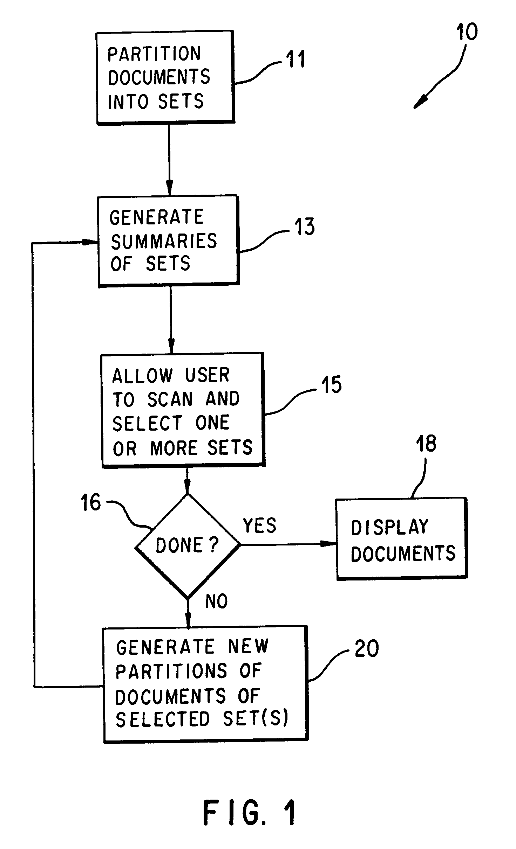

The invention is intended to be carried out in conjunction with a computer assisted search for identification of a selected number or set of documents from a collection of documents. The steps of the method are shown in the flowchart 10 in Figure 1. At the outset, a program or algorithm to partition the documents into sets 11 is performed. The program can be, for example, a program that automatically partitions the documents according to prescribed criteria, such as word frequency, key word existence, or other criteria. Or, the partitioning algorithm can be, for example, a fractionation or clustering algorithm, such algorithms being known in the art. Although the partitioning program can be geometric or exponential, preferably the partitioning program is linear, especially when large numbers of documents are contained in the corpus or collection of documents that is to be searched. One article that discusses clustering programs that can be used is described by jones, "Notes and references on early automatic classification work", pp. 10-17, February, 1991, incorporated herein by reference. An example of an algorithm that can be used is set forth by Yu et al., "Adaptive Document Clustering", ACM, pp. 197-203, 1985, incorporated herein by reference. Another example of hierarchic document clustering is set forth by Willett, "Recent Trends in Hierarchic Document Clustering: A Critical Review", Information Processing & Management, Vol. 24, no. 5, pp. 577-597, 1988, incorporated herein by reference.

Other document partitioning techniques are known by which a collection of documents can be partitioned into sets. The sets can be determined in accordance with any number of criteria. For example, in "Recent trends in hierarchic document clustering: A critical review" by Peter Willett, Information Processing of Management, Vol. 24, No. 5, pages 577-97 (1988 - printed in Great Britain), incorporated herein by reference, recent research into the use of hierarchic agglomerative clustering methods for document retrieval is reviewed. Willett shows the calculation of interdocument similarities and clustering methods that are appropriate for document clustering are introduced, and algorithms that can be used to allow the implementation of these methods on databases of nontrivial size are discussed. The validation of document hierarchies using tests based on the theory of random graphs and on empirical characteristics of document collections that are to be clustered is described. Willett indicates that a range of search strategies is available for retrieval from document hierarchies, and the results are presented of a series of research projects that have used these strategies to search the cluster resulting from several different types of hierarchic agglomerative clustering methods. Techniques such as the complete linkage method, nearest neighbor cluster method are discussed.

Another example of document content recognition is "Understanding Multi-Articled Documents" by Tsujimoto et al., presented in June 1990 in Atlantic City, New Jersey at the 10th International Conference for Pattern Recognition, incorporated herein by reference. This paper reports a method to understand document layouts without the assistance of the character recognition results, i.e., the meaning of contents. It is shown that documents have an obvious hierarchical structure in their geometry, and that a small number of rules can be used to transform the geometric structure into a logical structure that represents the semantics carried by the documents.

The number of partitions that are generated can be selectively adjusted, as desired. However, the number of partitions should be such that they can be easily sorted through by the user for efficient selection and segregation of those documents that are of possible interest. Ideally, the number of sets should be between 15 and 20.

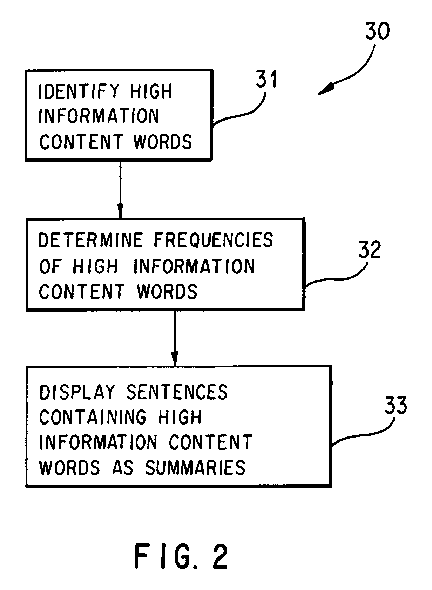

After the documents have been partitioned into sets, a summary 13 for each of the sets of documents is generated. The summary can be generated by an automatic summarization algorithm, such automatic summarization algorithms being known in the art. One summarization algorithm, for example, that can be used is illustrated in the flowchart 30 in Figure 2, in which high information content words are first determined 31, then the frequencies of the words are next determined 31. High information content words can be identified, for instance, by inverse document frequency (IDF) techniques that find those words with the highest score in each of the documents. Then, the sentences within the documents that contain the words are displayed 32.

The summaries are then displayed to the user, for example, on a computer monitor or the like. The user then is enabled to select one or more of the sets of documents by selecting one or more of the summaries displayed 15 (see Figure 1), for example, via a mouse, joy stick, or other computer input means.

The user then determines 16 if the set or sets of documents displayed are sufficient. If so, the documents contained in the set or sets are displayed to the user for printing, perusal, reading, or other use 18. On the other hand, if there are too many documents in the selected sets, another iteration is performed to narrow the number of selections. Thus, after the user has selected one or more of the summaries representing each of the sets of documents formed in the document partitioning, the documents contained in the selected sets are constituted to form a new collection of documents 20, and the new collection of documents is re-partitioned using the partitioning algorithm 13. The new partitions are then re-summarized 15 and the new set of summaries displayed to the user for further re-selection, if desired.

At this juncture, it should be noted that the partitioning algorithm is preferably of the type that generates more detailed partitions based upon differences in the documents in the selected set of documents, and does not continue to attempt to partition, for instance, on a particular search term that is common to all of the documents in the collection on which the documents have been previously partitioned. Thus, through an iterative process, the set of documents can be successively narrowed until a desired number of documents are partitioned into a final set acceptable to the user. Thus, the partitioning, summarizing, and set selection steps are repeated as many times as necessary for final document segregation and selection.

Although the invention has been described and illustrated with a certain degree of particularity, it is understood that the present disclosure has been made only by way of example, and that numerous changes in the combination and arrangement of parts can be resorted to by those skilled in the art without departing from the scope of the invention, as hereinafter claimed.

## Claims

1. A method for searching a collection of documents for a set of documents acceptable to a user without requiring the user to enter search words, including:
(a) partitioning the collection of documents into sets of documents;
(b) generating a summary for each of said sets of documents;
(c) enabling the user to select at least one of said sets of documents from the summary to define a new collection of documents;
(d) repeating steps (a) through (c) on each successive new collection of documents until the set of documents acceptable to the user is generated.

2. A method as claimed in claim 1, wherein said step of partitioning the collection of documents comprises performing an automatic partitioning algorithm.

3. A method for searching a collection of documents for a set of documents acceptable to a user without requiring the user to enter search words, comprising:
(a) performing an automatic partitioning of the documents into sets of documents in accordance with a predetermined partitioning algorithm;
(b) performing an automatic summary generation for each of said sets of documents to generate a summary for each set of partitioned documents;
(c) displaying the summary for each set of partitioned documents to the user;
(d) enabling the user to select at least one of said sets of documents from the summary to define a new collection of documents comprising the documents in the selected at least one of said sets of documents;
(e) repeating steps (a) through (d) on each successive new collection of documents until the set of documents acceptable to the user is partitioned from the collection.

4. A method as claimed in claim 2 or claim 3, wherein said step of performing an automatic partitioning algorithm comprises performing an automatic linear partitioning algorithm.

5. A method as claimed in claim 2 or claim 3, wherein said automatic partitioning algorithm comprises a clustering algorithm.

6. A method as claimed in claim 2 or claim 3, wherein said automatic partitioning algorithm comprises a fractionation algorithm.

7. A method as claimed in any preceding claim, wherein said step of generating a summary of each set of documents comprises performing a summarization algorithm.

8. A method as claimed in any preceding claim, wherein the step of partitioning each collection of documents into sets comprises partitioning each collection of documents into between 15 and 20 sets of documents.

9. A method as claimed in any preceding claim, wherein said step of enabling the user to select at least one of said sets of documents comprises enabling the user also to select a plurality of said sets of documents.
